# EUROPEAN PATENT APPLICATION

(11) **EP 2 677 441 A1**
(43) Date of publication of application: **25.12.2013**
(21) Application number: 12172550.1
(22) Date of filing: 19.06.2012
(51) Int. Cl.: G06F 17/30, G06F 21/00

(54) **Storing operational data of an industrial control system**

(71) Applicant: ABB Research Ltd., 8050 Zürich (CH)
(72) Inventor: Obermeier, Sebastian, 5107 Schinznach-Dorf (CH); Hadeli, Hadeli, 5400 Baden (CH); Hristova, Ana, 5400 Baden (CH); Gitzel, Ralf, 68165 Mannheim (DE)
(74) Representative: ABB Patent Attorneys

(57) **Abstract**

A method for storing operational data 28 of an industrial control system 12 comprises the steps of: receiving operational data 28 of the industrial control system 12; encoding the operational data 28 with an encoding function; storing the encoded operational data 30 in a database 38; receiving a database query; transforming the database query into a transformed database query compatible with the encoding function; receiving encoded query data 32 by executing the transformed database query on the encoded operational data 30 in the database 38; and decoding the encoded query data 32 with a decoding function.

## Description

### FIELD OF THE INVENTION

The invention relates to a method, a computer program and a computer-readable medium for storing operational data of an industrial control system. Furthermore, the invention relates to a gateway device and an industrial control system.

### BACKGROUND OF THE INVENTION

Nowadays, almost all industrial systems or production environments like power plants or power substations comprise a control system that monitors and controls the equipment of the industrial system. Such a control systems usually processes and stores large amounts of operational data like production data, measurement data from sensors, control data for controlling actuators and configuration data for the control devices. Due to reasons of security and documentation, the operational data may have to be stored in a historian database.

Service providers offer a historian data backup service. However, when using such a service, confidential operational data may have to be transmitted via an online connection, and may be stored at a remote data host, possibly even using cloud computing services.

In the industrial control system domain, trust is a critical factor for any solution that allows remote access to operational data. Operators and owners of industrial systems are usually reluctant to give out any information that they consider as strategic for their own business. Examples for such operational data are recipes, current production amounts, or detailed information about the process itself. For some of the information, it may not even be legally allowed to give them to third parties (for example production amounts may violate the Sarbanes-Oxley Act, as the sales volume is inferable from that). Therefore, each third party backup system of a service provider usually must guarantee confidentiality.

An approach to overcome this problem is the use of encryption: The operational data is stored at the service provider in an encrypted way.

Another approach is giving full control to service providers at the sake of confidentiality, and only relying on contracts that oblige the third party provider to adhere to certain rules when it comes to data access and its protection.

### DESCRIPTION OF THE INVENTION

General encryption mechanisms do not allow the execution of queries on the encrypted data. In order to be able to retrieve a specific value or to investigate a problem, the operator of an industrial system may have to download the complete database, decrypt it, and then execute his queries on the data.

It is an object of the invention to promote data backup processes of an industrial control system, and particularly to facilitate subsequent access to backup data.

This object is achieved by the subject-matter of the independent claims. Further exemplary embodiments are evident from the dependent claims and the following description.

A first aspect of the invention relates to a method for storing operational data of an industrial control system. For example, the industrial control system may be a control system of an electrical substation, a power plant, or a chemical plant. The invention may be applied to any kind of industrial process or plant that has a digital control system for monitoring its processes.

According to an embodiment of the invention, the method comprises the steps of: receiving operational data of the industrial control system; encoding the operational data with an encoding function; storing the encoded operational data in a database; receiving a database query; transforming the database query into a transformed database query compatible with the encoding function; obtaining encoded queried data by executing the transformed database query on the encoded operational data in the database; decoding the encoded query data with a decoding function.

In other words, historian operational data may be stored in any database, for example a database of a cloud computing service provider. Since the operational data is encoded, that means the data is at least masked or even may be encrypted, privacy issues of the operator of the industrial control system may be met.

The encoding function may be reversible and have an inverse function. The decoding function may be the inverse function of the encoding function. In any case, the application of the decoding function on data encoded with the encoding function should return the data transformed back to its original values.

Queries on the operational data may be reformulated or transformed in such a way that they are compatible with the encoding function. A transformed query executed on encoded data may return the encoded result of the original or untransformed query executed on the original or un-encoded data. Specifically, the query may commute with the encoding function, and a commutative property between the step of encoding and the step of executing a query operation may render the outcome independent of the order of the steps.

In such a way, a confidential data hosting system may be provided that needs no modifications of systems of third party data hosting service providers.

According to an embodiment of the invention, the encoding function is an encryption function. In other words, the encoding of the operational data may be an encryption of the operational data and/or the decoding is a decryption of the operational data. For example, a private key may be used for encrypting and decrypting the operational data.

According to an embodiment of the invention, the encoding function is a homomorphic encryption scheme. Homomorphic encryption schemes allow performing meaningful computation (algebraic operations, statistical analysis) on encrypted data. In other words, operations may be performed on the data without deciphering.

For example, when g is an operation or function compatible with a homomorphic encryption scheme H, and d is operational data, then g( H(d) ) = H (g (d) ) may hold. In a simple case, when g is multiplication, then H(d1) * H(d2) = H ( d1 * d2 ) may hold.

In "Craig Gentry: Computing arbitrary functions of encrypted data. Commun. ACM 53(3): 97-105 (2010)" it has been proven that it is possible to define a homomorphic encryption scheme that allows the execution of any function on encrypted data.

There are (partially) homomorphic encryption schemes that are only homomorphic to a specific set of functions on the data. In this case, only database queries may be transformed that only comprise such specific functions. However, when only limited query abilities are offered by the encryption, the method may be used for scheduling algorithms or maintenance planning tools.

However, when a more simple encoding function is used, the database query may be transformed by applying the encoding function to parameters of the database query.

According to an embodiment of the invention, the encoded operational data is transmitted via a large scale communication network to the database. For example, the encoded or encrypted data may be transmitted via the Internet, and the database may be located remote from a device of the control system performing the method.

According to an embodiment of the invention, the database is distributed among a plurality of servers connected to a large scale communication network. For example, the database may be provided by a cloud computing service provider.

A further aspect of the invention relates to a computer program for storing operational data of an industrial control system, which, when being executed by at least one processor, is adapted to carry out the steps of the method as described in the above and in the following. The processor may be the processor of a device of the control system that performs the method.

A further aspect of the invention relates to a computer-readable medium, in which such a computer program is stored. A computer-readable medium may be a floppy disk, a hard disk, an USB (Universal Serial Bus) storage device, a RAM (Random Access Memory), a ROM (Read Only Memory) and an EPROM (Erasable Programmable Read Only Memory). A computer-readable medium may also be a data communication network, e.g. the Internet, which allows downloading a program code.

A further aspect of the invention relates to a gateway device for an industrial control system that is adapted for performing the steps of the method as described in the above and in the following. With the gateway device, the operational data may be anonymized or masked, stored in a remote database or service storage.

The gateway device may provide an interface for accessing the operational data. In other words, the encoding and decoding of the operational data and the transformation of the queries may be virtual to a user or other device accessing the interface.

A further aspect of the invention relates to an industrial control system with such a gateway device. The industrial automation and control system may comprise an interface to a historian database, which may be an external data host or data cloud.

It has to be understood that features of the method as described in the above and in the following may be features of the control system and the gateway device as described in the above and in the following and vice versa.

These and other aspects of the invention will be apparent from and elucidated with reference to the embodiments described hereinafter.

### BRIEF DESCRIPTION OF THE DRAWINGS

The subject-matter of the invention will be explained in more detail in the following text with reference to exemplary embodiments which are illustrated in the attached drawings.
Fig. 1 schematically shows an industrial control system according to an embodiment of the invention.
Fig. 2 shows a flow diagram for a method for processing operational data according to an embodiment of the invention.

In principle, identical parts are provided with the same reference symbols in the figures.

### DETAILED DESCRIPTION OF EXEMPLARY EMBODIMENTS

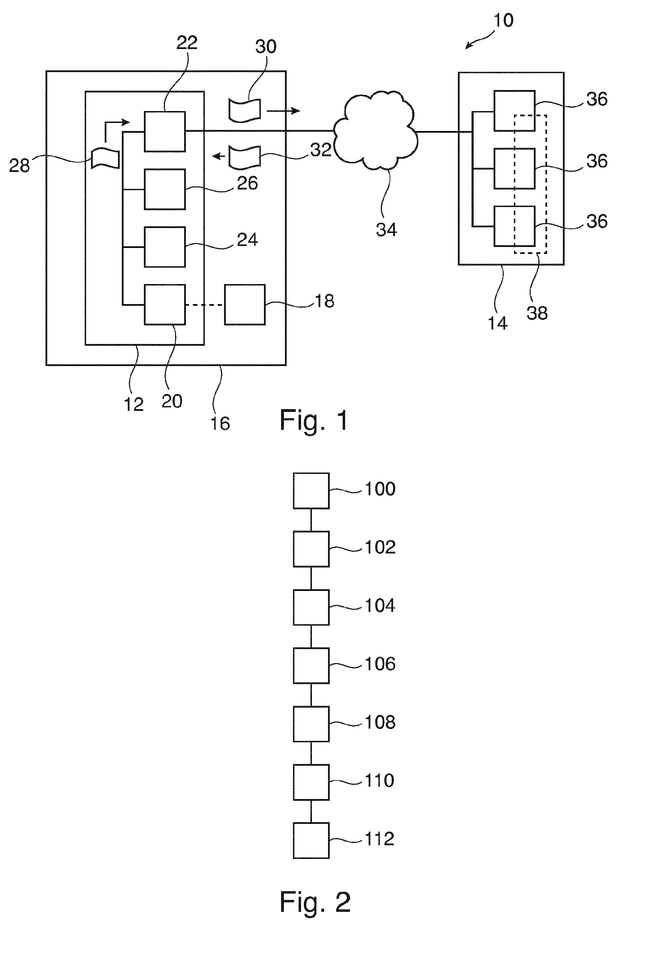

Fig. 1 shows a system 10 comprising an industrial control system 12 and a service provider system 14. For example, the industrial control system 12 may be an automation and control system of an electrical substation, an electrical plant, or any plant 16 for performing any industrial process.

For example, the plant 16 comprises a plurality of primary devices 18, like switches, valves, sensors, and the industrial control system 12 comprises secondary devices 20 or controllers 20 that may control the primary device 18 and/or may receive operational data like measurement values from the primary device 18.

The industrial control system 12 may further comprise other computers 24, for example engineering workstations and/or a human machine interface that may access and monitor the controllers 20, and a data historian device 26 for the backup of operational 28 data from the devices 20, 24 of the industrial control system.

The industrial control system 12 further comprises a gateway device 22 that is adapted to receive operational data 28 from the other devices 20, 24, 26, to encode or to encrypt the operational data into encoded or encrypted operational data 30 and to store the encoded operational data 30 at the service provider 14. Furthermore, the gateway device 22 is adapted to transform queries such that they are compatible with the encoding or encryption scheme, and to receive encoded query data 32 from the database provider 14 as will be explained in more detail with respect to Fig. 2.

The gateway device 22 may be seen as a shadow historian 22 that does not store operational data 32 but mimics the original interface of a data historian 26.

For example, the shadow historian 22 may be used in case the regular historian 26 fails.

In addition, the gateway device 22 may be used for accessing operational data 30 in case the primary data historian 26 has failed or in other cases when the hosted data 30 needs to be accessed.

The industrial control system 12 is connected via a data communication network 34, for example the Internet, to the service provider 14, which may be an off-site third party hosting site. The service provider 14 may be any site offering data storage service but need not offer data security services.

The service provider 14 may be a cloud computing service provider and may operate a plurality of server computers 36 that host a database 38, in which the encoded operational data 32 may be stored. The database 38 may be adapted for executing database queries on the encoded operational data 32.

Fig. 2 shows a flow diagram for a method for processing operational data. The method may be performed by the gateway device 22, for example with software running on the gateway device 22.

In step 100, the gateway device 22 receives operational data 28 of the industrial control system 12. For example, the operational data 28 is sent by the devices 20 to the gateway device 22. Alternatively, the gateway device may regularly query the device 20 to transmit operational data 28 that has to be backuped. The operational data may comprise measurement data, configuration data and control data of the industrial control system 12.

Additionally, the data historian device 26, which may be adapted to store operational data 28 in a database of its own, may use the gateway device 22 for storing operational data 28 that, for example, need not be queried as fast as the operational data 28 stored in the data historian device 26.

In step 102, the gateway device 22 encodes the operational data 28 with a reversible encoding function. An encoding function may be a simple masking function that is invertible, but also may be a complicated encryption function like a homomorphic encryption scheme.

As a first example, the encoding function may perform an invertible operation on values of the operational data 30 that may result in a masking of the operational data 30. Such invertible operations may include XOR or modulo-addition.

A simplified example is to add a certain value, e.g. "3", to each value x that should be stored. The addition may be done by a modulo-addition operation. Instead of x, x+3 is stored. In such a way, the database 38 stores all values with an increment of 3.

In general, the operational data 28 may be encoded with any kind of invertible function f that has an inverse function g, i.e. g( f(x)) = x. The function f may be the encoding function, the function g may be the decoding function.

As second example, the encoding may be performed by a homomorphic encryption scheme. Homomorphic encryption keeps the operational data 28 private, but at the same time allows applying functions on the encrypted operational data 30 to compute a (still encrypted) result 32 of the data without a secret decryption key. This may be possible with very complex functions.

In step 104, the gateway device 22 stores the encoded operational data 30 in the database 38. For example, the gateway device executes storing operations with the database 38 by sending corresponding messages via the Internet 34.

After the steps 100 to 104, the operational data 28 is stored in encoded or encrypted form 30 in the database 38, which may be remote from the industrial site at a site of the service provider 14. In the case the operational data 30 is encrypted, even the service provider 14 cannot decipher the content of the stored data. For less confidential data, it may be possible that the operational data 30 is only masked such that a deciphering of the content is only possible with great efforts.

Now the gateway device 22 waits for requests to return specific amounts of operational data 28.

In step 106, the gateway device 22 receives a database query. For example, the data historian device 26 needs operational data 28 that is not stored in its database, or a user at an engineering workstation 24 requests specific data.

In step 108, the gateway device 22 transforms the database query into a transformed database query compatible with the encoding function.

With respect to the above first example, when q(x,y) is a query depending on the parameters x and y, the transformed query may be q ( f(x), f(y) ), where f is the encoding function. The query may be transformed by applying the encoding function f to the parameters of the database query q.

For example, if f(x) = x-3 as a simple example, the query q(x) is transformed to q(x-3). Assume q(x) should return all data values exceeding a threshold of 1000. In this case, q(x) → {x>1000: true; otherwise: false}

The gateway device 22 would reformulate the rule in the following way: q'(x) → {x-3>1000: true; otherwise: false}

With respect to the second example with a homomorphic encryption scheme as encoding function, the query q may be a concatenation of functions that are compatible with the homomorphic encryption scheme. The query may be divided into the compatible functions by the gateway device 22 and each compatible function may be transformed. After that, the transformed query may be concatenated by the transformed compatible functions.

In the end, the transformed query is sent to the database 38, for example via the Internet 34 to the service provider 14. The database 38 applies the transformed query to the encoded operational data 30 and generates encoded query data 32 without decoding either the transformed query or the encoded operational data 30. The encoded query data 32 is sent back to the gateway device 22.

The database 38 needs not to be aware that the operational data 30 stored is encoded. In such a way, the database 38 needs not be modified for executing queries on encoded operational data 30. Furthermore, no encoding or encryption scheme has to be provided to the service provider 14.

In step 110, the gateway device 22 receives the encoded query data 32. The database 38 receives the transformed query and performs it as a normal query on the encoded operational data 30. The query result is sent back to the gateway device as encoded query data 32.

In step 112, the gateway device 22 decodes the encoded query data 32 with a decoding function.

With respect to the above first example, the decoding function g may be the inverse function of the decoding function f. When y is the encoded query data, the decoded query data is g(d).

For example, when f is the addition by three, each item of the returning set of the encoded query data 32 is decoded by decreasing it by 3.

In the case of a homomorphic encryption scheme, the encrypted query data 32 returned by the database 38 is decoded by decrypting the encrypted query data 32 with the private key already used for encrypting the operational data 28.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

## Claims

1. A method for storing operational data (28) of an industrial control system (12), the method comprising the steps of:
receiving operational data (28) of the industrial control system (12);
encoding the operational data (28) with an encoding function;
storing the encoded operational data (30) in a database (38);
receiving a database query;
transforming the database query into a transformed database query compatible with the encoding function;
obtaining encoded query data (32) by executing the transformed database query on the encoded operational data (30) in the database (38);
decoding the encoded query data (32) with a decoding function.

2. The method of claim 1,
wherein the encoding function is an encryption function.

3. The method of claim 1 or 2,
wherein the encoding function is a homomorphic encryption scheme.

4. The method of one of the preceding claims,
wherein the encoded operational data (30) is transmitted via a large scale communication network (34) to the database (38), and wherein the encoded query data (32) is transmitted via the large scale communication network (34) from the database (38).

5. The method of one of the preceding claims,
wherein the database query is transformed by applying the encoding function to parameters of the database query.

6. The method of one of the preceding claims,
wherein the database (38) is distributed among a plurality of servers (36) connected to a large scale communication network (34).

7. A computer program for storing operational data of an industrial control system (12), which, when being executed by a processor, is adapted to carry out the steps of the method of one of claims 1 to 6.

8. A computer-readable medium, in which a computer program according to claim 7 is stored.

9. A gateway device (22) for an industrial control system, adapted to
encode operational data (28) of the industrial control system (12) with an encoding function and to transmit the encoded operational data (30) to a data host for storing in a database (38);
transform a database query into a transformed database query compatible with the encoding function; and to transmit the transformed database query to the data host,
decode, with a decoding function, encoded query data (32) obtained by executing the transformed database query on the encoded operational data (30) in the database (38).

10. The gateway device (22) of claim 9, adapted to encode the operational data (28) by means of a homomorphic encryption scheme.
